# EUROPEAN PATENT APPLICATION

(11) **EP 4 567 013 A1**
(43) Date of publication of application: **11.06.2025**
(21) Application number: 23307127.3
(22) Date of filing: 04.12.2023
(51) Int. Cl.: C04B 11/032

(54) **HEAT RECOVERY**

(71) Applicant: SAINT-GOBAIN PLACO, 92400 Courbevoie (FR)
(72) Inventor: MAGAUD, Lionel, 84300 Cavaillon (FR); FRANCY, Olivier, 84300 Cavaillon (FR); TRAN, Binh, 92400 Courbevoie (FR); MONTIGNY, Benoît, 92400 Courbevoie (FR); KAPLE, Kishor, 92400 Courbevoie (FR)
(74) Representative: Murgitroyd & Company

(57) **Abstract**

A system for producing gypsum based products via a wet calcination process is provided. The system comprises a mixing stage for providing a gypsum slurry, a reactor stage for calcinating the gypsum slurry to an alpha hemihydrate slurry and a dewatering stage for removing water from the alpha hemihydrate slurry. The water is removed as liquid water and as steam. The liquid water is recycled back to the mixing stage as a water source. The latent and sensible heat of the steam is used as a heating source for the system to reduce the energy requirements for heating in the system.

## Description

### FIELD OF THE DISCLOSURE

The present disclosure generally relates to a system and method for producing gypsum based (e.g. alpha hemihydrate) products via a wet calcination process. More specifically, the present disclosure relates to a system and method for producing gypsum based (e.g. alpha hemihydrate) products via a wet calcination process whereby steam and liquid water extracted during the wet calcination process are recycled back into the system and method to provide a more energy efficient process. Namely, the latent and sensible heat of the steam is used as a heating source to reduce the energy requirements for heating in the system.

### BACKGROUND TO THE INVENTION

Gypsum occurs naturally as a raw material in the form of calcium sulphate dihydrate. Gypsum containing products, such as plasterboard, are prepared by forming a mixture of calcined or dehydrated gypsum, namely calcium sulphate hemihydrate, with water, to form a settable slurry which can then be cast into a pre-determined shape. The hemi-hydrate reacts with the water and becomes re-hydrated to the dihydrate crystal, which is then cured or dried to the solid state.

The hemihydrate form of gypsum is known to depend on the calcination process, and is categorised into two basic forms, the alpha-hemihydrate and the beta-hemihydrate. The beta-hemihydrate is typically formed by heating gypsum under atmospheric conditions, to drive off any moisture and chemically combined water to form dried crystals, which may then be ground to a fine powder. The beta-hemihydrate has long been the favoured hemihydrate in the production of gypsum wall boards or plasterboards, owing to the rapid re-hydration of the ground crystal in forming the slurry. However, the gypsum product derived from the beta-hemihydrate is typically soft and the beta-hydrate requires large volumes of water to produce the required slurry fluidity.

The alpha-hemihydrate is formed by heating gypsum under pressure to similarly remove the water associated therewith. The gypsum product derived from the alpha-hemihydrate however, is found to be harder and comprises a higher strength and density compared with beta-hemihydrate derived gypsum.

It is necessary to use substantial amounts of water and heat energy in wet calcination processes. Wet calcination processes can therefore be very energy intensive. It is thus an aim of the present invention to improve the energy efficiency of wet calcination process of alpha calcium sulphate hemihydrate.

### SUMMARY OF THE INVENTION

In a first aspect, a system is provided for producing gypsum based products via a wet calcination process. The system comprises:
a mixing stage in fluid communication with a gypsum source and one or more water sources, wherein the mixing stage is configured to mix gypsum with water and output a gypsum slurry;
a reactor stage in fluid communication with the mixing tank, wherein the reactor stage is configured to convert the gypsum slurry into an alpha hemihydrate slurry;
a dewatering stage in fluid communication with the reactor stage, wherein the dewatering stage removes water from the alpha hemihydrate slurry, wherein the dewatering stage comprises:
   a first output for outputting an alpha hemihydrate product;
   a liquid water output; and
   a steam output;
wherein the liquid water output is in fluid communication with, and downstream of, the mixing stage such that liquid water output provides one of the one or more water sources that supplies water to the mixing stage; and
wherein the steam outlet of the dewatering stage is in fluid communication with one or more of the mixing stage, the reactor stage or a water source such that the latent and sensible heat of the steam is used as a heating source to reduce the energy requirements for heating in the system.

As noted above, the production of alpha hemihydrate products is an energy intensive process requiring various stages of heating as well as large quantities of water, the majority of which must then be evaporated or removed during a drying (or dewatering) step to provide a usable product. The first aspect thus provides a novel system for the manufacture of gypsum based (e.g. alpha hemihydrate) products that redirects the steam and/or water that is removed from the alpha hemihydrate slurry back into the process such that the latent and/or sensible heat energy stored therein can be recycled and used as a heat source for at least one of the preceding stages in the manufacturing process. As such, the energy requirements of the system are reduced and the energy efficiency of the system is improved, thus allowing alpha hemihydrate products to be produced more greenly (e.g. with a reduced CO₂ footprint) and more economically.

The following features and embodiments may be combined in any suitable and/or desirable way to provide an embodiment of the first aspect falling within the scope of the appended claims.

As noted above, the mixing stage is in fluid communication with a gypsum source and one or more water sources. It will be appreciated that the gypsum (supplied from the gypsum source) and the water (supplied from the one or more water sources) may be supplied to the mixing stage in any suitable and/or desirable way. For example, the system may further comprise one or more pumps associated with one or each of the gypsum source and the water sources such that the gypsum and water is pumped into the mixing stage via a conduit.

Optionally, the mixing stage is a mixing tank. Optionally the mixing stage (e.g. the mixing tank) comprises a mixing means configured to mix (e.g. combine or blend) the gypsum with water and provide the gypsum slurry. The mixing means may be any suitable and/or desirable means such as a paddle mixer, a rotor/stator, a high-frequency vibrator or plate, and so on.

The water supplied to the mixing stage is supplied from one or more water sources. Optionally, the mixing stage is supplied by an internal (e.g. recycled) water source and an external water source. The internal water source is the liquid water which output from the dewatering stage. As such, the internal water source comprises recirculated water that has already passed through the system at least once. However, not all of the water that is combined with the gypsum to provide the gypsum slurry in the mixing stage is recovered (e.g. removed) from the alpha hemihydrate during the dewatering stage. Furthermore, some of the water is recovered as steam rather than liquid water. As such, to ensure that enough water is supplied to the mixing stage to provide a gypsum slurry of a desirable consistency, an external water source may also be used to top-up (e.g. supplement) the water from the internal water source.

Optionally, the one or more water sources may supply pre-heated water (that is, water at a temperature above room temperature) into the mixing stage. As such, optionally, one or more of the water sources may comprise a heating means configured to heat the water contained therein to a desirable temperature before the water is supplied to the mixing stage.

Optionally, the system may further comprise a container in fluid communication with the liquid water output of the dewatering stage, wherein the container is configured to collect and store the liquid water output from the dewatering stage. The container thus provides a water source for the mixing stage. The steam outlet of the dewatering stage may also be in fluid communication with the container such that that the latent and sensible heat of the steam is used as a heating source to reduce the energy requirements for heating in the system.

As such, the steam output from the dewatering stage may be used to heat the liquid water in the container (that in turn forms the internal water source) to provide water at an elevated temperature (e.g. a temperature above 50°C, e.g. a temperature from 50°C to 80 °C). As such, the heat energy stored within the steam is recycled back into the system such that the need for external heating (e.g. heating provided by burning fossil fuels, e.g. electrical heating) is reduced and the energy efficiency of the system and method is improved.

Once the gypsum slurry has been produced, the gypsum slurry is passed to the reactor stage (e.g. via a conduit) where the gypsum slurry is converted into an alpha hemihydrate slurry. Calcination processes are well known in the art, and any suitable and/or desirable calcination process may be used in combination with the present system to provide an alpha hemihydrate slurry.

Optionally, the reactor stage is configured to operate at an elevated temperature and/or pressure. Optionally, the reactor stage is configure to heat the gypsum slurry to an elevated temperature from 100°C to 200°C, preferably from 110°C to 170°C, more preferably from 120°C to 150°C, more preferably from 130°C and 140°C. Optionally, the reactor stage is configured to pressurise the gypsum slurry (and/or the environment in which the gypsum slurry is located) to an elevated pressure from 1.5 bar to 10 bar, preferably 2 bar to 8 bar, more preferably 3 bar to 5 bar.

Optionally, the reactor stage comprises one or more (e.g. two, e.g. a plurality) of reactor units. Optionally, two or more reactor units are arranged in series. For example, a plurality of reactor units in series may be used to segment the calcination process into a plurality of sequential steps. For example, one or more reactor units may be used to heat the gypsum slurry to a desired temperature in a step-wise manner. This can, for example, help to ensure even heating throughout the gypsum slurry. Optionally, at least one (e.g. one, e.g. a first) reactor unit may be used to heat the gypsum slurry and at least one (e.g. one, e.g. a second) reactor unit may be used to pressurise the gypsum slurry (or the environment around which the gypsum slurry is located). Optionally, heating and pressurisation may occur within one (e.g. a single) reactor unit.

Optionally, the reactor stage comprises an autoclave configured to heat the gypsum slurry and (e.g. at least partially, e.g. fully) convert the gypsum slurry into an alpha hemihydrate slurry. Optionally, one or more reactor units may each comprise an autoclave.

Optionally, the reactor stage comprises a pre-heating reactor unit configured to heat the gypsum slurry to an intermediate temperature before the gypsum slurry is passed into a reactor unit comprising an autoclave (e.g. where the gypsum slurry is heated to an elevated temperature). The intermediate temperature is lower than the temperature to which the gypsum slurry is heated in the autoclave (e.g. the elevated temperature).

Optionally, the reactor stage comprises a pre-pressurisation unit configured to pressurise the gypsum slurry to a desired (e.g. elevated) pressure prior to the gypsum slurry being passed into a reactor unit comprising an autoclave (e.g. where the gypsum slurry is heated to an elevated temperature). In such embodiments, the reactor unit comprising the autoclave is optionally able to maintain the elevated pressure obtained during the pre-pressurisation step such that the heating occurs under pressure.

The dewatering stage is in fluid communication (e.g. and downstream of) the reactor stage such that the alpha hemihydrate slurry is passed into the dewatering stage to remove water. The dewatering stage is thus configured to remove water as both liquid water (via the liquid water output) and as steam (i.e. vapour water) and provide an alpha hemihydrate product that includes less water (i.e. is drier) than the alpha hemihydrate slurry.

Optionally, the dewatering stage comprises a flash tank configured to cool the alpha hemihydrate slurry and collect steam. Optionally, the flash tank is in communication with, and downstream of, the reactor stage. Optionally, the flash tank is the first step in the dewatering stage and thus the flash tank directly receives the alpha hemihydrate slurry output from the reactor stage. Optionally, the flash tank is held at a pressure lower than the pressure of the alpha hemihydrate slurry. Optionally, the flash tank comprises a steam source configured to provide the lower pressure within the flash tank. As such, when the alpha hemihydrate slurry is passed into the flash tank, at least some of the water (e.g. the solvent) of the alpha hemihydrate slurry is vaporised into steam, thus reducing the amount of water (e.g. dewatering) the alpha hemihydrate slurry. Optionally, the flash tank comprises a steam output. In other words, optionally, the dewatering stage comprises a first steam output associated with the flash tank.

Optionally, the dewatering stage comprises a belt filter. Optionally, the belt filter is in communication with, and downstream of, the flash tank such that the alpha hemihydrate slurry is passed from the flash tank to the belt filter. Any suitable and/or desirable belt filter arrangement (sometimes referred to as a belt press filter or belt filter press) can be used. Optionally, the belt press comprises a liquid water output, a steam output and an alpha hemihydrate product output. As such, optionally, the steam output from the dewatering stage comprises a first steam output associated with the flash tank and a second steam output associated with the belt filter.

The liquid water extracted from the alpha hemihydrate slurry in the dewatering stage (e.g. the belt filter) is optionally provided at a temperature less than 100°C. Optionally, the temperature of the liquid water extracted from the alpha hemihydrate slurry in the dewatering stage is above room temperature (e.g. 20°C). Optionally, the temperature of the liquid water extracted from the alpha hemihydrate slurry in the dewatering stage is from 30°C to 90°C, preferably from 30°C to 70°C, e.g. from 40°C to 60°C, e.g. approximately 50°C.

Optionally, the system further comprises a filtrate unit in fluid communication with the liquid water output of the dewatering stage, wherein the filtrate unit comprises a container. The filtrate unit can thus collect and store liquid water and provide a water source for the mixing stage. Optionally, the steam outlet of the dewatering stage is in fluid communication with the filtrate unit such that the latent and sensible heat of the steam is used as a heating source to reduce the energy requirements of the heating in the system. As such, the mixing stage, the reactor stage, the dewatering stage and the filtrate unit may be considered to provide a continuous and/or system for water to flow through the system.

Optionally, the filtrate unit comprises a container in which the liquid water output from the dewatering stage is collected. Optionally, the liquid water is allowed to sit in the container such that any residual alpha hemihydrate or gypsum solid is allowed to settle at the bottom of the container. Optionally, the filtrate unit may further comprise a filter configured to separate any solid residue from the liquid water output from the dewatering stage. The filter may be any suitable and/or desirable filter. For example, a gravity filter may be used whereby the filter physically prevents solid particulate material (e.g. alpha hemihydrate solid or gypsum solid material) from passing through a mesh, membrane or barrier. For example, centrifugal filtration may be used.

It will be appreciated that steam is gaseous or vapour water. As such, steam has a temperature that is at least 100°C. The temperature of the steam is proportional to the pressure of the steam, as such, as the pressure increases, the temperature of the steam increases. Optionally, the steam generated in the dewatering stage (e.g. output from the flash tank and/or the belt filter) has a temperature from 100°C to 150°C, e.g. from 105°C to 110°C, e.g. from 120°C to 130°C. As such, the steam generated in the dewatering stage comprises latent and sensible energy that can be used as a heating source for any of the preceding stages in the process that involve heating.

Optionally, the steam output from the dewatering stage may be used directly as a heat source. It will be appreciated steam may be used in any suitable and/or desirable way. For example, the steam may be used to fill a thermal heat jacket surrounding one or a plurality of tanks that form part of the system (e.g. a mixing tank, e.g. a reservoir tank filled with the liquid water output from the dewatering stage). Additionally or alternatively, the steam may be injected or mixed into a component of the system (e.g. the liquid water, gypsum slurry or alpha hemihydrate slurry) to effect a temperature increase proportional to the ratio and temperatures of the component to the steam.

Optionally, the temperature of the steam output from the dewatering stage may be increased to further increase the heating capacity of the steam. Any suitable and/or desirable method of increasing the temperature of the steam may be used. For example, the pressure of the steam could be increased or a heat transformer may be used.

Optionally, system further comprises a heat transformer unit (e.g. an absorption heat transformer unit) in fluid communication with, and downstream of, the steam output of the dewatering stage. Any suitable and/or desirable heat transformer (e.g. absorption heat transformer) may be used. Optionally, the heat transformer is an ejection absorption heat transformer unit. Optionally, the (e.g. absorption) heat transformer may be in fluid communication with one or both of the first steam output and the second steam output. As such, only some of the steam output by the dewatering system may have its temperature increased.

Absorption heat transformer units are preferably configured to transfer heat from a first temperature to a second temperature using an absorption process in an energy efficient manner. An absorption heat transformer unit may thus be used as part of the present invention to increase the temperature of the steam output from the dewatering stage (and thus increase the thermal energy stored within the steam such that it can then be used as an efficient heat source. Surprisingly, the inventors have found that the energy savings offered by using the resulting steam as a heat source outweighs the energy cost of increasing the temperature of the steam using an absorption heat transformer. As such, by including a heat transformer, a system and method with an improved overall energy efficiency is surprisingly and advantageously provided.

Optionally, the heat transformer is configured to receive steam at a first temperature from the steam outlet (e.g. the first and/or second steam outlet), and output stream at a second temperature, wherein the second temperature is higher than the first temperature. Optionally, the first temperature is from 100 °C to 120 °C, e.g. from 100 °C to 115 °C, e.g. from 100 °C to 110°C, e.g. from 100 °C to 105°C, e.g. from 105 °C to 110°C, e.g. from 105 °C to 115 °C, e.g. from 105 °C to 120 °C, e.g. from 110 °C to 120 °C. Optionally, the second temperature is from 105 °C to 200 °C, e.g. from 110 °C to 190 °C, e.g. from 120 °C to 180 °C, e.g. from 130 °C to 170 °C, e.g. from 140 °C to 160 °C, e.g. from 120 °C to 180 °C, e.g. from 130 °C to 180 °C, e.g. from 140 °C to 180 °C, e.g. from 150 °C to 180 °C.

Optionally, the second temperature is at least 10 °C higher than the first temperature, e.g. at least 15 °C higher than the first temperature, e.g. at least 20 °C higher than the first temperature, e.g. at least 25 °C higher than the first temperature, e.g. at least 30 °C higher than the first temperature, e.g. at least 35 °C higher than the first temperature, e.g. at least 40 °C higher than the first temperature, e.g. at least 45 °C higher than the first temperature, e.g. at least 50 °C higher than the first temperature. Optionally, the second temperature is from 10 °C to 100°C higher than the first temperature, e.g. from 20 °C to 90 °C higher than the first temperature, e.g. from 30 °C to 80 °C higher than the first temperature, e.g. from 40 °C to 80 °C higher than the first temperature, e.g. from 50 °C to 80 °C higher than the first temperature.

Optionally, the heat transformer (e.g. the absorption heat transformer unit, e.g. the ejection heat transformer unit) is configured to receive steam at a first pressure from the steam outlet, and output stream at a second pressure, wherein the second pressure is higher than the first pressure. Optionally, the second pressure is from 100 kPa to 400 kPa, e.g. from 150 kPa to 350 kPa, e.g. from 200 kPa to 300 kPa.

Optionally, the output of the heat transformer unit (e.g. the output comprising the steam at a second temperature and/or second pressure) is in fluid communication with, and upstream of, the filtrate unit, the mixing stage and/or the reactor stage. Optionally, the steam at the second temperature and/or second pressure is used as a heat source in one or more of the filtrate unit, the mixing tank and/or the reactor stage.

Optionally, the steam at the second temperature and/or second pressure is used to heat the liquid water output from the dewatering stage. For example, the liquid water may be stored/collected in the filtrate unit where the liquid water is heated before being supplied to the mixing stage. Optionally, the temperature of the liquid water output from the filtrate unit is from 50°C to 100°C, preferably from 60°C to 90°C, more preferably from 70°C to 80°C. Optionally, the steam is used to increase the temperature of the liquid water by at least 10 °C, e.g. by at least 15 °C , e.g. by at least 20 °C , e.g. by at least 25 °C , e.g. by at least 25 °C, e.g. by at least 30 °C, e.g. by at least 35 °C, e.g. by at least 40 °C, e.g. by at least 45 °C, e.g. by at least 50 °C, e.g. by at least 60 °C, e.g. by at least 70 °C. Optionally, the steam is used to increase the temperature by from 10 °C to 70 °C, e.g. from 10 °C to 65 °C, e.g. from 10 °C to 60 °C, e.g. from 10 °C to 55 °C, e.g. from 20 °C to 70 °C, e.g. from 30 °C to 70 °C, e.g. from 40 °C to 70 °C, e.g. from 50 °C to 70 °C, e.g. from 20 °C to 60 °C, e.g. from 25 °C to 60 °C , e.g. from 30 °C to 60 °C.

Optionally, the system further comprises a conduit arranged to fluidly couple the liquid water output of the dewatering stage (e.g. the belt filter) to the mixing tank, wherein steam from the dewatering stage (e.g. directly from the steam output or via a heat transformer) is mixed with liquid water from the dewatering stage in the conduit such that the temperature of the water is increased with respect to the temperature of the liquid water output from the liquid unit. Optionally, the system further comprises a conduit arranged to fluidly couple the filtrate unit to the mixing tank, wherein steam from the dewatering stage (e.g. directly from the steam output or via a heat transformer) is mixed with liquid water from the filtrate unit in the conduit such that the temperature of the water is increased with respect to the temperature of the water at the filtrate unit.

Optionally, the conduit comprises a venturi through which water in the conduit flows, wherein the venturi comprises an injection port (e.g. a jet injection port) and wherein the steam is introduced (e.g. injected) through the injection port (e.g. the jet injection port). Preferably, the steam is injected at the throat (e.g. the narrowest part) of the venturi. In other words, the injection port is arranged at the throat of the venturi. By injecting the steam into the liquid water flowing through the venturi, the temperature of the liquid water is increased and the sensible and latent heat of the steam is fully dissipated within the liquid due to the high velocity of the liquid into which the steam is injected. This also provides a simpler and more cost effective method of heating the liquid water than other known methods, such as transformer units, and thus may be more suitable for some methods. The venturi further acts to create a depressurization proximate to the (e.g. jet) injection port which pulls steam at atmospheric pressure into the conduit. As such, the steam provided does not need to be at elevated pressures thus reducing the energy requirements of the system. Optionally, the conduit connecting the steam output (e.g. the first or second steam output or the output of the heat transformer) comprises a regulation valve. As such, the depressurization is localised to the conduit and does not negatively affect upstream processes. Optionally, the venturi forms part of a water jet heating system.

Optionally, the water flowing through the venturi has a first temperature before entering the venturi and a second temperature on output from the venturi, wherein the second temperature is higher than the first temperature. Optionally, the first temperature is from 20 °C to 60 °C, e.g. from 25 °C to 55 °C, e.g. from 30 °C to 50 °C, e.g. from 35 °C to 40 °C, e.g. from 40 °C to 45 °C. Optionally, the second temperature is at least is at least 30 °C, e.g. at least 35 °C, e.g. at least 40 °C, e.g. at least 45 °C, e.g. at least 50 °C, e.g. at least 55 °C, e.g. at least 60 °C, e.g. at least 65 °C, e.g. at least 70 °C, e.g. at least 75 °C, e.g. at least 80 °C, e.g. at least 85 °C, e.g. at least 90 °C.

Optionally, the second temperature is at least 10 °C higher than the first temperature, e.g. at least 15 °C higher than the first temperature, e.g. at least 20 °C higher than the first temperature, e.g. at least 25 °C higher than the first temperature, e.g. at least 30 °C higher than the first temperature, e.g. at least 35 °C higher than the first temperature, e.g. at least 40 °C higher than the first temperature, e.g. at least 45 °C higher than the first temperature, e.g. at least 50 °C higher than the first temperature, e.g. at least 55 °C higher than the first temperature, e.g. at least 60 °C higher than the first temperature. Optionally, the second temperature is from 10 °C to 70 °C higher than the first temperature, e.g. from 10 °C to 65 °C higher than the first temperature, e.g. from 10 °C to 60 °C higher than the first temperature, e.g. from 10 °C to 55 °C higher than the first temperature, e.g. from 20 °C to 70 °C higher than the first temperature, e.g. from 30 °C to 70 °C higher than the first temperature, e.g. from 40 °C to 70 °C higher than the first temperature, e.g. from 50 °C to 70 °C higher than the first temperature, e.g. from 20 °C to 60 °C higher than the first temperature, e.g. from 25 °C to 60 °C higher than the first temperature, e.g. from 30 °C to 60 °C higher than the first temperature.

Optionally, the (e.g. jet) injection port is in fluid communication with the steam output of the dewatering stage (e.g. the first steam output and/or the second steam output, e.g. the output from the heat transformer). Optionally, the steam provided at the steam output of the dewatering stage (e.g. the first steam output and/or the second steam output, e.g. the output from the heat transformer) is from 10 kPa to 400 kPa above atmospheric pressure, e.g. from 50 kPa to 350 kPa above atmospheric pressure, e.g. from 75 kPa to 325 kPa above atmospheric pressure, e.g. from 100 kPa to 300 kPa above atmospheric pressure, e.g. from 125 kPa to 275 kPa above atmospheric pressure, e.g. from 150 kPa to 250 kPa above atmospheric pressure, e.g. from 175 kPa to 225 kPa, e.g. approximately 200 kPa above atmospheric pressure. Optionally, the steam provided at the first steam output and/or the second steam output is from 10 kPa to 100 kPa, e.g. from 15 kPa to 80 kPa, e.g. from 20 kPa to 60 kPa, e.g. from 25 kPa to 50 kPa. Optionally, the steam provided at the output of the heat transformer is from 100 kPa to 400 kPa above atmospheric pressure, e.g. from 120 kPa to 380 kPa above atmospheric pressure, e.g. from 140 kPa to 360 kPa above atmospheric pressure, e.g. from 160 kPa to 340 kPa above atmospheric pressure, e.g. from 180 kPa to 320 kPa above atmospheric pressure, e.g. approximately 200 kPa above atmospheric pressure.

In a second aspect, a method of forming a gypsum based product in a wet calcination process is provided (e.g. using the system of the first aspect). The method comprises:
providing (e.g. in the mixing stage of the first aspect) a gypsum slurry by mixing gypsum with (e.g. pre-heated or unheated) water from one or more water sources;
calcinating the gypsum slurry (e.g. in the reactor stage of the first aspect) to provide an alpha hemihydrate slurry;
removing water (e.g. in the dewatering stage of the first aspect) from the alpha hemihydrate slurry, wherein the water is removed as liquid water and as steam;
wherein the liquid water removed from the alpha hemihydrate slurry is recycled (e.g. via the filtrate unit of the first aspect) to be used as one of the one or more water sources (e.g. in the mixing stage of the first aspect); and
wherein the steam removed from the alpha hemihydrate slurry is used as a heating source to heat one or more of:
   the gypsum slurry (e.g. during the mixing step and/or the calcination step, e.g. in the mixing stage and/or the reactor stage of the first aspect);
   the alpha hemihydrate slurry (e.g. during the reactor stage of the first aspect); or
   the liquid water removed from alpha hemihydrate slurry before being used as the water source in the step of providing the gypsum slurry.

The second aspect thus provides a novel method for the manufacture of gypsum based (e.g. alpha hemihydrate) products that redirects the steam and/or water that is removed from the alpha hemihydrate slurry back into the process such that the latent and/or sensible heat energy stored therein can be recycled and used as a heat source for at least one of the preceding stages in the manufacturing process. As such, the energy requirements of the method are reduced and the energy efficiency of the system is improved, thus allowing alpha hemihydrate products to be produced more greenly (e.g. with a reduced CO₂ footprint) and more economically.

It should be appreciated from the above that the first aspect may be used to perform the method of the second aspect. As such, the features outline above with respect to the first aspect apply equally to the second aspect. Furthermore, the following features and embodiments of the second aspect may be combined in any suitable and/or desirable way to provide an embodiment of the second aspect falling within the scope of the appended claims.

Optionally, the method may comprise providing the gypsum slurry in a mixing stage (e.g. of the first aspect). Optionally, the mixing stage is in fluid communication with a gypsum source and one or more water sources. As such, the method may comprise supplying (e.g. pumping, e.g. transferring) gypsum and water into a mixing stage to provide the gypsum slurry.

Optionally, the method may comprise pre-heating the water to an elevated temperature prior to supplying the water into the mixing stage. Optionally, (e.g. waste) steam generated by the method (e.g. in the dewatering stage of the first aspect, e.g. in a downstream process) during the step of removing water from the alpha hemihydrate slurry is used as the heat source for pre-heating the water to an elevated temperature. As such, the method may comprise pre-heating the water to a temperature above 50°C, e.g. a temperature from 50°C to 80 °C before supplying the water (e.g. to the mixing chamber) to be used to provide the gypsum slurry.

Optionally, the method comprises passing the gypsum slurry (e.g. from the mixing stage, e.g. from a mixing tank) to a reactor stage (e.g. to a reactor forming part of a reactor stage which may comprise one or more reactors) where the step of calcinating the gypsum slurry is carried out (e.g. conducted, e.g. performed).

Optionally, the step of calcinating the gypsum slurry further comprises heating the gypsum slurry to an elevated temperature and/or pressurising the gypsum slurry (or the environment surrounding the gypsum slurry) to an elevated pressure. Optionally, the elevated temperature is from 100°C to 200°C, preferably from 110°C to 170°C, more preferably from 120°C to 150°C, more preferably from 130°C and 140°C. Optionally, the elevated pressure from 1.5 bar to 10 bar, preferably 2 bar to 8 bar, more preferably 3 bar to 5 bar. Optionally, heating and pressurising the gypsum slurry occur sequentially (e.g. in a step-wise manner) or simultaneously (e.g. in the same reactor).

Optionally, the reactor stage comprises one or more (e.g. two, e.g. a plurality) of reactor units. Optionally, the method comprises heating a first reactor to the elevated temperature and pressurising a second reactor to the elevated pressure, wherein the first reactor is in fluid communication with, and upstream or downstream of, the second reactor. Optionally, at least the heating sub-step of the calcination step occurs within an autoclave. Optionally, the heating and pressurisation sub-steps of the calcination step occur simultaneously within an autoclave.

Optionally, the method comprises heating the gypsum slurry to an intermediate temperature prior to heating the gypsum slurry to the elevated temperature for the calcination step. For example, the intermediate temperature is lower than the temperature to which the gypsum slurry is heated in the autoclave (e.g. the elevated temperature).

Optionally, the method comprises pressurising the gypsum slurry to an intermediate pressure prior to heating and/or pressurising the gypsum slurry to the elevated temperature and/or elevated pressure required for the calcination step.

Optionally, after the step of calcinating the gypsum slurry, the resulting alpha hemihydrate slurry is fluidly passed into a dewatering stage and the method comprise removing water from the alpha hemihydrate slurry and outputting liquid water (via a liquid water output) and steam (i.e. vapour water, e.g. via a steam outlet).

Optionally, the method comprises cooling the alpha hemihydrate slurry to a lower temperature than the elevated temperature used for the calcination process. Optionally, the method comprises passing the alpha hemihydrate slurry (e.g. from a reactor stage) into a flash tank for cooling. Optionally, the method comprises generating steam in the cooling step. Optionally, the method comprises outputting steam from the flash tank used in the colling step.

Optionally, the method comprises removing water from the alpha hemihydrate slurry using a belt filter. Optionally, the method comprises passing the alpha hemihydrate slurry from the reactor stage directly into the belt filter (i.e. without first passing through a cooling stage such as a flash tank). Optionally, the method comprises cooling the alpha hemihydrate slurry (e.g. in a flash tank) prior to passing the alpha hemihydrate slurry into a belt filter. Optionally, the method comprises removing water as liquid water and steam in the belt filter. Optionally, the method comprises outputting steam (e.g. via a steam output) and outputting liquid water (e.g. via a liquid water output) from the belt filter.

Optionally, the method comprises filtering the liquid water (e.g. in the filtrate unit) removed from the alpha hemihydrate slurry (e.g. in the dewatering stage, e.g. in the belt filter). Optionally, the method comprises outputting the liquid water removed from the alpha hemihydrate slurry to a filtrate unit. Optionally, the method further comprises using the liquid water (e.g. in the filtrate unit) as the water for providing the gypsum slurry.

The steam removed from the alpha hemihydrate slurry is used as a heating source for the method. For example, the method may comprise injecting the steam into the liquid water, gypsum slurry or alpha hemihydrate mixture to effect a temperature increase (e.g. heat) proportional to the ratio and temperatures of the component to the steam.

Optionally, the method comprises increasing the temperature the steam that is removed from the alpha hemihydrate slurry, e.g. before it is used as a heating source. For example, the method comprises passing the steam (e.g. output from the dewatering stage, e.g. output from the flash tank and/or belt filter) to a heat transformer such as an ejection absorption heat transformer unit.

Optionally, the temperature of the steam is increased (e.g. with respect to the temperature of the steam removed from the alpha hemihydrate slurry, e.g. with respect to the temperature of the steam output from the dewatering stage) by at least 10 °C, e.g. by at least 15 °C, e.g. by at least 20 °C, e.g. by at least 25 °C, e.g. by at least 30 °C, e.g. by at least 35 °C, e.g. by at least 40 °C, e.g. by at least 45 °C, e.g. by at least 50 °C. Optionally, the temperature of the steam is increased from 10 °C to 100°C, e.g. from 20 °C to 90 °C, e.g. from 30 °C to 80 °C, e.g. from 40 °C to 80 °C, e.g. from 50 °C to 80 °C.

Optionally, the heat transformer (e.g. the absorption heat transformer unit, e.g. the ejection heat transformer unit) is configured to receive steam at a first pressure from the steam outlet, and output stream at a second pressure, wherein the second pressure is from 100 kPa to 400 kPa above atmospheric pressure, e.g. from 120 kPa to 380 kPa above atmospheric pressure, e.g. from 140 kPa to 360 kPa above atmospheric pressure, e.g. from 160 kPa to 340 kPa above atmospheric pressure, e.g. from 180 kPa to 320 kPa above atmospheric pressure, e.g. approximately 200 kPa above atmospheric pressure.

Optionally, the method comprises passing the steam output from a heat transformer unit to one or more of the filtrate unit, the mixing tank and/or the reactor stage to heat the components (e.g. mixtures, e.g. gypsum slurry, e.g. liquid water, e.g. alpha hemihydrate ) contained therein.

Optionally, the method comprises heating the liquid water removed from the alpha hemihydrate slurry using the steam. For example, the method may comprise mixing the liquid water removed from the alpha hemihydrate slurry with the steam removed from the alpha hemihydrate slurry such that the resulting water mixture (e.g. the steam/liquid water mixture) is heated. Optionally, the steam and the liquid water are combined within the filtrate unit. Optionally, the temperature of the water output from the filtrate unit is from 50°C to 100°C, preferably from 60°C to 90°C, more preferably from 70°C to 80°C. Optionally, the steam is used to increase the temperature of the liquid water by at least 10 °C, e.g. by at least 15 °C , e.g. by at least 20 °C , e.g. by at least 25 °C , e.g. by at least 25 °C, e.g. by at least 30 °C, e.g. by at least 35 °C, e.g. by at least 40 °C, e.g. by at least 45 °C, e.g. by at least 50 °C, e.g. by at least 60 °C, e.g. by at least 70 °C. Optionally, the steam is used to increase the temperature by from 10 °C to 70 °C, e.g. from 10 °C to 65 °C, e.g. from 10 °C to 60 °C, e.g. from 10 °C to 55 °C, e.g. from 20 °C to 70 °C, e.g. from 30 °C to 70 °C, e.g. from 40 °C to 70 °C, e.g. from 50 °C to 70 °C, e.g. from 20 °C to 60 °C, e.g. from 25 °C to 60 °C , e.g. from 30 °C to 60 °C.

Optionally, the method comprises combining the steam with the liquid water in a conduit. Optionally, the conduit is arranged to fluidly couple the liquid water output (preferably the filtrate unit) to the mixing tank, wherein steam from the dewatering stage (e.g. directly from the steam output or via a heat transformer) is mixed with water from the filtrate unit in the conduit such that the temperature of the water is increased with respect to the temperature of the water at the filtrate unit.

Optionally, the method comprises injecting the steam into the conduit at a throat of a venturi located within the conduit. In other words, the injection port is arranged at the throat of the venturi. Optionally, the method comprises heating the liquid water removed from the alpha hemihydrate slurry before passing (e.g. recycling) the liquid water to the mixing stage. Optionally, the temperature of the liquid water is increased by at least 10 °C, e.g. by at least 15 °C, e.g. by at least 20 °C, e.g. by at least 25 °C, e.g. by at least 30 °C, e.g. by at least 35 °C, e.g. by at least 40 °C, e.g. by at least 45 °C, e.g. by at least 50 °C higher, e.g. by at least 55 °C, e.g. by at least 60 °C. Optionally, the temperature of the liquid water is increased from 10 °C to 70°C, e.g. from 20 °C to 60 °C, e.g. from 30 °C to 50 °C, e.g. from 40 °C to 45 °C, e.g. from 45 °C to 50 °C..

### BRIEF DESCRIPTION OF DRAWINGS

The disclosure will be further described with reference to examples depicted in the accompanying figures in which:
Figure 1 is a schematic diagram showing a system in accordance with an embodiment of the first aspect;
Figure 2 is a schematic diagram showing a system in accordance with an embodiment of the first aspect;
Figure 3 is a schematic diagram showing a system in accordance with an embodiment of the first aspect;
Figure 4 is a schematic diagram showing a system in accordance with an embodiment of the first aspect;

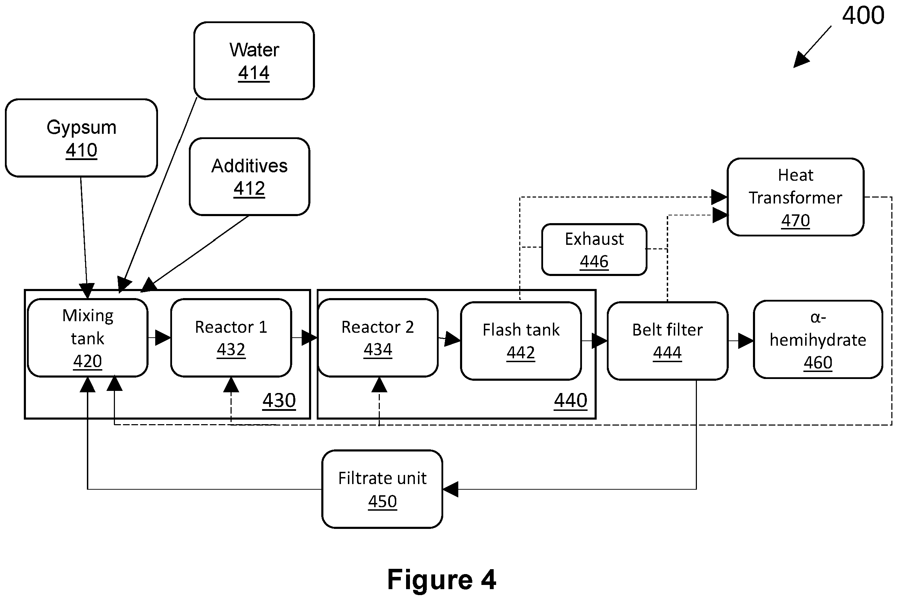

Figure 4 is a schematic diagram showing a system in accordance with an embodiment of the first aspect; and

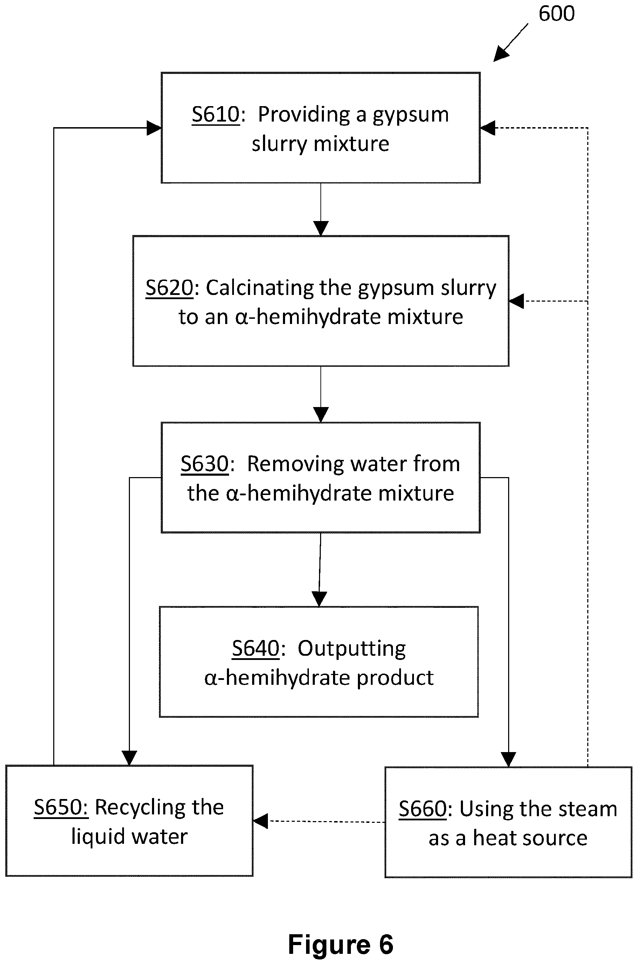

Figure 6 is a flow diagram showing a method in accordance with an embodiment of the second aspect.

### DETAILED DESCRIPTION

The following description presents particular examples and, together with the drawings, serves to explain principles of the disclosure. However, the scope of the invention is not intended to be limited to the precise details of the examples, since variations will be apparent to a skilled person and areas deemed to be covered by the description. Terms for components used herein should be given a broad interpretation that also encompasses equivalent functions and features. In some cases, alternative terms for structural features may be provided but such terms are not intended to be exhaustive.

Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner.

The description herein refers to examples with particular combinations of features, however, it is envisaged that further combinations and cross-combinations of compatible features between embodiments will be possible. Indeed, isolated features may function independently as an invention from other features and not necessarily require implementation as a complete combination.

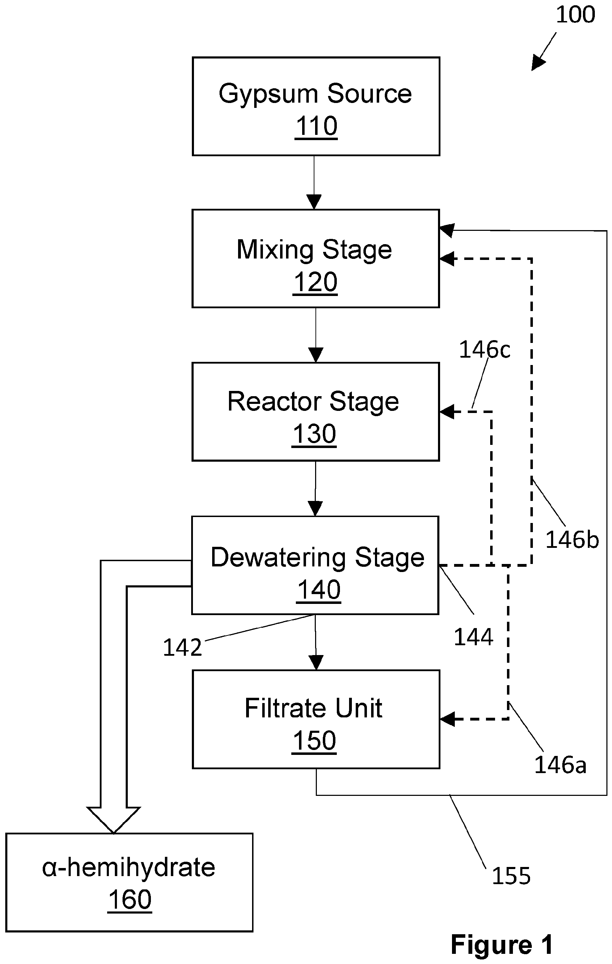

Figure 1 shows a schematic representation of a system 100 that can be used to produce an alpha hemihydrate product 160. The system 100 includes a gypsum source 110 that provides gypsum to a mixing stage 120 where the gypsum is mixed with water to provide a gypsum slurry. The mixing stage 120 thus includes any suitable and/or desirable means to effectively mix the gypsum (and any other additives or components to be included within the slurry) with water. Optionally, the mixing stage may include sensors to determine when the right consistency of slurry has been produced.

Once the gypsum slurry has been produced in the mixing stage 120, the gypsum slurry is transferred (e.g. via a conduit) to the reactor stage 130. The reactor stage 130 is the stage in the process where the gypsum slurry is calcinated to provide an alpha hemihydrate slurry. Calcination is a known process and may be performed in any suitable and/or desirable way known in the art. This often involves heating and/or pressurising the gypsum slurry to an elevated temperature and pressure which may be performed in a single step or in a plurality of sequential steps within the reactor stage 130.

Once the alpha hemihydrate slurry (i.e. a flowable mixture of alpha hemihydrate with water as a flowable slurry) has been provided (i.e. by calcination), the mixture is passed into the dewatering stage 140 of the system 100 where water is removed from the alpha hemihydrate slurry to provide an alpha hemihydrate product 160 (which comprises less water than the alpha hemihydrate slurry, but is not itself necessarily dry, e.g. it may be a "moist" product). The dewatering stage 160 may be formed by any suitable and/or desirable process or equipment that separates water out from the alpha hemihydrate slurry. For example, the dewatering stage 160 may be formed by a belt filter or any other suitable and/or desirable filtering process.

The liquid water that is removed from the alpha hemihydrate slurry is output through output port 142 where it is passed to a filtrate unit 150 that acts to collect the liquid water and, optionally, purify or filter any solid particulate material, impurities or waste product from the liquid water before it is recycled (via conduit 155) back to the mixing stage 120 to be used as the (internal) source of water to be mixed with the gypsum and provide the gypsum slurry.

Water is also removed from the alpha hemihydrate slurry as steam in the dewatering stage 140. The steam is output from the dewatering stage 140 via steam output port 144 where the steam can then be transported (via conduits 146a, 146b, 146c) to be used as a heating source. The steam output port 144 is thus in fluid communication with at least one of the mixing stage 120 (to pre-heat the gypsum slurry prior to calcination), the reactor stage 130 (to heat the gypsum slurry to the desired elevated temperature for the calcination process to convert the gypsum slurry to an alpha hemihydrate slurry) or the filtrate unit 150 (to heat the liquid water before it is mixed with gypsum in the mixing stage 120 to provide the gypsum slurry). As such, even though further heating may be necessary to achieve the desired temperatures for the production process, the latent and sensible heat of the waste steam is used as a heating source and thus reduces the energy requirements for heating in the system.

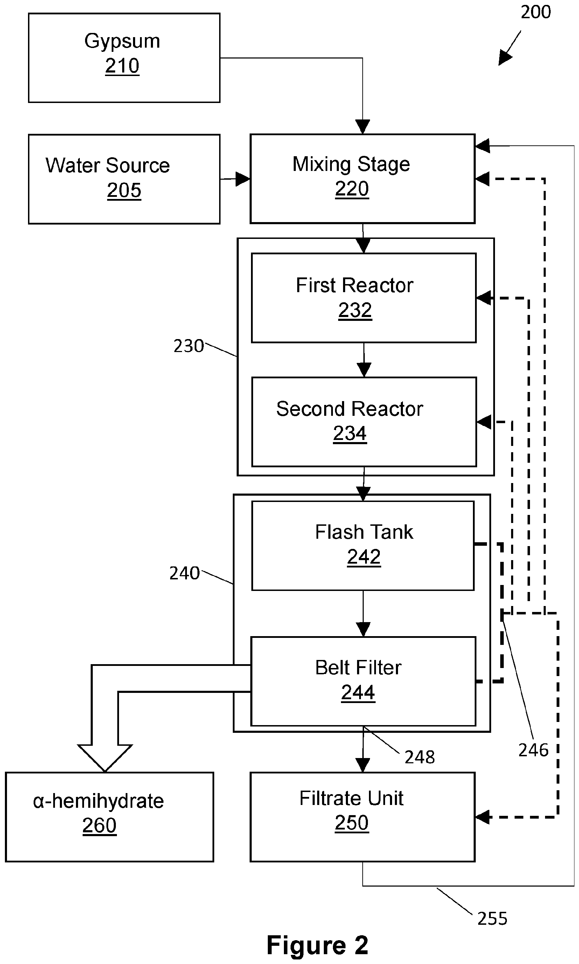

Figure 2 shows a schematic representation of a system 200 that is similar in nature to the system 100 shown in Figure 1 and can be used to produce an alpha hemihydrate product 260.

As with system 100, system 200 includes a gypsum source 210 that provides gypsum to a mixing stage 120 where the gypsum is mixed with water to provide a gypsum slurry. In this example, system 200 also includes an external water source 205 which is used to supplement the water supply that is recycled internally (i.e. the liquid water extracted during the dewatering stage 240 and provided via the filtrate unit 250).

Once the gypsum slurry has been produced in the mixing stage 220, the gypsum slurry is transferred (e.g. via a conduit) to the reactor stage 230. In this example, the reactor stage 230 includes two reactors 232, 234 (although there is no limit on the number of reactors that may be included, two are just depicted for simplicity). A plurality of reactors may be used to provide more control over the calcination process. For example, the plurality of reactors may be used to increase the temperature in a stepwise manner to allow more precise control over the temperature of the gypsum slurry within the reactor and an improvement in the heat transfer efficiency due to the increased surface area with respect to a single reactor.

As shown, each of the reactors 232, 234 may be fluidly connected to a steam output from the dewatering stage 240 such that each of the reactors may use the waste steam, at least in part, as a heat source for the heating processes used within the reactors. As discussed above, the heating may be performed in any suitable and/or desirable way. For example, the steam may be used to flood a heating jacket around a tank that forms one or both of the reactors 232, 234. For example, the steam may be inserted into the reactors 232, 234 such that the steam has a duel function as a heating source and a further source of water in addition to the liquid water introduced in the mixing stage 220.

Once the calcination process has been completed within the reactor stage 240 (i.e. converting the gypsum slurry to an alpha hemihydrate slurry), the resulting alpha hemihydrate slurry is passed into the dewatering stage 240 where water is removed to provide an alpha hemihydrate product 260. In this example, the dewatering stage includes a flash tank 242 (which cools the alpha hemihydrate slurry and generates steam) and a belt filter 244 (which removes liquid water and steam from the slurry to provide the resulting alpha hemihydrate product 260). The steam output of the dewatering stage is thus provided by a first steam output associated with the flash tank and a second steam output associated with the belt filter 244. In the example shown, both the first and the second steam outputs are combined to provide a common steam output 246 from the dewatering stage 240 which can be transported, via conduits, to different parts of the system (such as the first reactor 232, the second reactor 234, the mixing stage 220 and the filtrate unit 250) to provide a heat source to different parts of the system 200 in the same way as described above for system 100 in figure 1.

However, in other embodiments, the first and second steam outputs (associated with different steam generating stages in the dewatering stage 240) may be fluidly connected to different parts of the system such that each steam output acts as a heating source for different parts of the system. For example, it might be anticipated that one stage will generate more steam (or hotter steam) than another stage. As such, the steam output associated with the different stages can be directed to parts of a system that provides the best utilisation of the heat energy contained within the steam. For example, if the flash tank 242 generates less steam (by volume) than the belt filter 244, it may be desirable to direct the steam generated within the flash tank 242 to parts of system 200 that require a lesser amount of heating (i.e. the desired temperature to be achieved is lower) compared to the steam generated within the belt filter 244. As such, it can be ensured that every calorie of energy is being effectively used by the system to ensure maximum energy efficiency.

The liquid water that is removed from the alpha hemihydrate slurry is output through output port 248 where it is passed to a filtrate unit 250 that acts to collect the liquid water and, optionally, purify or filter any solid particulate material, impurities or waste product from the liquid water before it is recycled (via conduit 255) back to the mixing stage 220 to be used as the (internal) source of water (additional to the external water source 205) to be mixed with the gypsum and provide the gypsum slurry.

The dashed lines shown in Figures 1 and 2 are intended to represent possible steam flow paths and are not intended to be limiting. As such, the systems 100, 200 may only include one of the steam flow paths shown and are not intended to be interpreted as necessarily including all of the flow paths. For example, in some embodiments, the steam may only flow to the mixing stages 120, 220 to be used as a source of heat. Thus, any suitable and/or desirable combination or arrangement of steam flow paths may be selected depending on the heat requirements and processes performed by the system.

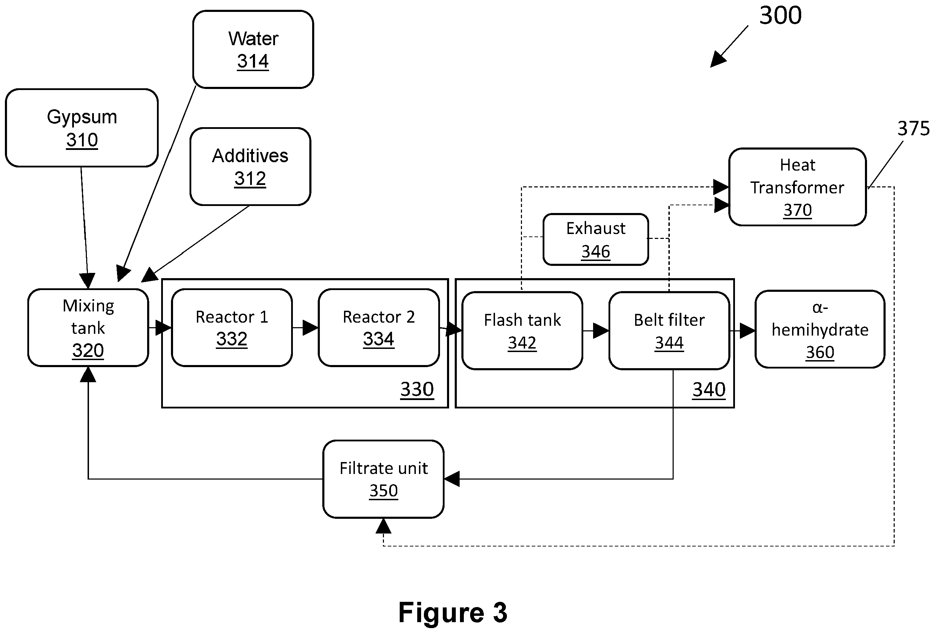

Figures 3, 4 and 5 provide different specific embodiments related to system 200.

Figure 3 shows a system 300 comprising a gypsum source 310, an external water source 314 and an additive source 312 which feed into the mixing tank 320 where a gypsum slurry is provided. The gypsum slurry is then passed into a reactor stage 320 formed from a first reactor 332 and a second reactor 334 where the gypsum slurry is calcinated to provide an alpha hemihydrate slurry. The alpha hemihydrate slurry is then passed into the dewatering stage 340 which is formed by a flash tank 342 (where the temperature of the mixture is reduced and steam is generated) and a belt filter 344 (where liquid water and steam is removed from the alpha hemihydrate slurry to provide an alpha hemihydrate product 360).

Each of the flash tank 342 and the belt filter 344 produces steam which can be used as a source of heat energy. In this embodiment, the system 300 further includes a steam exhaust 346 which can be used to relieve pressure and/or vent excess steam. The belt filter 344 may also be associated with a vacuum pump to pull the steam out through the steam output associated therewith.

The steam output from the dewatering system 340 is then transported to a heat transformer unit 370 (preferably an ejection absorption heat transformer) where the temperature (and potentially pressure) of the steam is increased. As such, the steam output from the heat transformer 370 via line 375 has a higher temperature than the steam which is input into the heat transformer 370. In this example, the steam output from the heat transformer 370 is used to heat the liquid water collected in the filtrate unit 350. As such, the liquid water (extracted in the dewatering stage 340 by the belt filter 344) is heated to an increased temperature (e.g. between 50°C and 80°C) before being recycled back into the mixing tank 320. Preferably, the steam is used to increase the temperature of the liquid water by between 10°C and 40°C, e.g. approximately 25°C. For example, if the water output from the belt filter has a temperature of approximately 50°C, the steam may be injected into the filtrate unit 350 to increase the temperature of the liquid water to approximately 75°C. As such, the additional heating required at the mixing stage 320 is reduced and the energy efficiency of the system is improved.

Figure 4 shows system 400 which contains all of the same components as system 300. However, in contrast to system 300, the steam output from the heat transformer 470 (at an elevated temperature compared to the steam input to the heat transformer 470) is used to heat at least one (e.g. one, two or all) of the mixing stage 420, the first reactor 432 or the second reactor 434 instead of the filtrate unit 450.

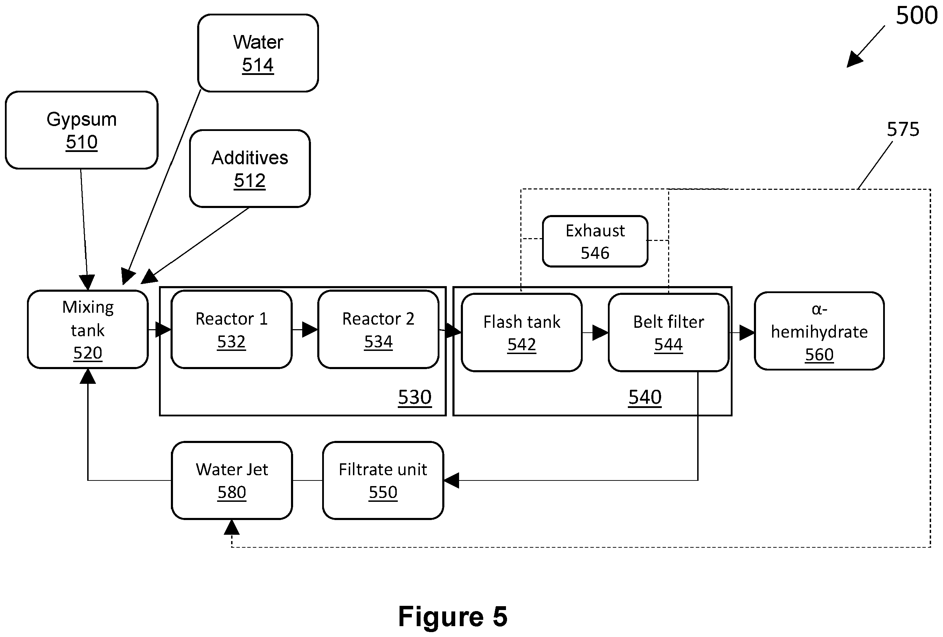

Figure 5 shows system 500 which replaces the heat transformer 370, 470 of systems 300 and 400 with a water jet 580 unit. In this embodiment, the water jet unit 580 is intended to represent an arrangement comprising a venturi arranged in the conduit extending between the filtrate unit 550 and the mixing tank 520. The venturi thus accelerates the flow of liquid water running through the conduit such that there is a reduction in pressure through the venturi which in turn creates a pressure differential and pulls steam flowing through the conduit 575 into the conduit via an injection port. Preferably, the injection port is provided at the throat of the venturi where the pressure differential is greatest. This arrangement thus means that the steam output from the dewatering stage 540 (via the flash tank 542 and/or the belt filter 544) does not need to be pressurised before being injected into the conduit line, but rather, may be provided at substantially atmospheric pressure. As such, the energy requirements of the system 500 is reduced whilst simultaneously improving the energy efficiency of the process.

Figure 6 shows an exemplary method 600 that may be used (and performed in systems 100-500 shown in Figures 1-5) to provide an alpha hemihydrate product. The method 600 first includes providing (in step 610) a gypsum slurry by mixing gypsum with water from one or more water sources. For example, the gypsum slurry may be provided by supplying gypsum and water (e.g. via a filtrate unit and/or an external water source) into a mixing stage, such as the mixing stages 120, 220, 320, 420, 520 shown in Figures 1-5.

In a next step, the method includes calcinating (step 620) the gypsum slurry (e.g. in the reactor stages 130, 230, 330, 430, 530 shown in Figure 1-5) to provide an alpha hemihydrate slurry.

The method then involves removing water (step 630) from the alpha hemihydrate slurry (e.g. in the dewatering stage 140, 240, 340, 440, 550 of Figures 1-5) as liquid and/or steam. The liquid water which is extracted from the alpha hemihydrate slurry in the dewatering stage (e.g. dewatering stage 140, 240, 340, 440, 550 of Figures 1-5) may be recycled back into the process to be used as the water source needed to provide the gypsum slurry in step 610. This may occur directly by collecting, storing and/or filtering the extracted liquid water in a filtrate unit (e.g. filtrate unit 150, 250, 350, 450, 550 in Figures 1-5). The method may also include heating the extracted liquid water prior to recycling the liquid water as a water source for the providing gypsum slurry step. For example, the liquid water may be heated in the filtrate unit (e.g. filtrate unit 150, 250, 350, 450, 550 in Figures 1-5) using the steam which is also extracted from the alpha hemihydrate slurry in the dewatering step (e.g. step 630).

The steam generated in the dewatering step (e.g. step 640) may then be used as a source of heat for various stages in the method 600. For example, the method may comprise using the steam extracted from the alpha hemihydrate slurry to heat upstream or downstream stages in the process. For example, the method may include heating the gypsum slurry (e.g. in the mixing stage 120, 220, 320, 420, 520) or the water used to provide the gypsum slurry (e.g. in the filtrate unit 150, 250, 350) using steam extracted from the alpha hemihydrate slurry after the calcination step. Similarly, the method may include using the steam extracted from the alpha hemihydrate slurry as a source of heat in the calcination step.

The present invention thus provides an improved system for producing alpha hemihydrate (e.g. gypsum based) products which are suitable for use as building materials (e.g. plasterboard). The scope of the present disclosure however is limited only by the appended claims.

## Claims

1. A system for producing gypsum based products via a wet calcination process, the system comprising:
a mixing stage in fluid communication with a gypsum source and one or more water sources, wherein the mixing stage is configured to mix gypsum with water and output a gypsum slurry;
a reactor stage in fluid communication with the mixing tank, wherein the reactor stage is configured to convert the gypsum slurry into an alpha hemihydrate slurry;
a dewatering stage in fluid communication with the reactor stage, wherein the dewatering stage removes water from the alpha hemihydrate slurry, wherein the dewatering stage comprises:
a first output for outputting an alpha hemihydrate product;
a water output; and
a steam output;
wherein the liquid water output is in fluid communication with, and downstream of, the mixing stage such that liquid water output provides one of the one or more water sources that supplies water to the mixing stage; and
wherein the steam outlet of the dewatering stage is in fluid communication with one or more of the mixing stage, the reactor stage or a water source such that the latent and sensible heat of the steam is used as a heating source to reduce the energy requirements for heating in the system.

2. The system of claim 1, further comprising a filtrate unit in fluid communication with the liquid water output of the dewatering stage, wherein the filtrate unit is in fluid communication with, and downstream of, the mixing stage such that the filtrate unit is one of the one or more water sources that supplies water to the mixing stage.

3. The system of claim 2, wherein the steam outlet of the dewatering stage is in fluid communication with the filtrate unit as the water source.

4. The system of any one of claims 1, 2 or 3, wherein the dewatering stage comprises a flash tank configured to cool the alpha hemihydrate slurry and collect steam; and
wherein the steam output of the dewatering stage comprises a first steam output associated with the flash tank.

5. The system of any preceding stage, wherein the dewatering stage comprises a belt filter; and
wherein the steam output from the dewatering stage comprises a second steam output associated with the belt filter.

6. The system of claim 5 when dependent on claim 4, wherein the belt filter is in fluid communication with, and downstream of, the flash tank.

7. The system of claim 5 or 6, wherein the water output of the dewatering stage comprises a first water output associated with the belt filter.

8. The system of any preceding claim, wherein system further comprises a heat transformer unit in fluid communication with, and downstream of, the steam output of the dewatering stage.

9. The system of claim 8, wherein the heat transformer is an absorption heat transformer unit, such as an ejection absorption heat transformer unit.

10. The system of any preceding claim, wherein an output of the heat transformer unit is in fluid communication with, and upstream of, the filtrate tank, the mixing tank and/or the reactor stage.

11. The system of any one preceding claim, wherein the system further comprises a conduit arranged to fluidly couple the filtrate tank to the mixing tank, wherein steam from the dewatering stage is mixed with water from the filtrate tank in the conduit such that the temperature of the water is increased with respect to the temperature of the water at the filtrate tank.

12. The system of claim 11, wherein the conduit comprises a venturi through which water in the conduit flows;
wherein the venturi comprises injection port, preferably wherein the injection port is arranged at the throat of the venturi; and
wherein the steam is introduced to the water via the injection port such that the water flowing through the venturi has a first temperature before entering the venturi, and a second temperature on exit from the venturi, wherein the second temperature is greater than the first temperature.

13. The system of any one of the preceding claims, wherein the reactor stage comprises one or more reactor units, preferably wherein the one or more reactor units are arranged in series.

14. The system of any preceding claim, wherein the reactor stage comprises an autoclave configured to heat the gypsum slurry and at least partially convert the gypsum slurry into an alpha hemihydrate slurry.

15. A method of forming a gypsum based product, the method comprising:
providing a gypsum slurry by mixing gypsum with water from a water source;
calcinating the gypsum slurry to provide an alpha hemihydrate slurry;
removing water from the alpha hemihydrate slurry to provide an alpha hemihydrate product, wherein the water is removed as liquid water and as steam;
wherein the liquid water removed from the alpha hemihydrate is recycled to be used as one of the one or more water sources; and
wherein the steam removed from the alpha hemihydrate is used as a heating source to heat one or more of:
the gypsum slurry;
the alpha hemihydrate slurry; or
the liquid water removed from alpha hemihydrate slurry before being used as the water source in the step of providing the gypsum slurry.
